(19) Europäisches Patentamt
European Patent Office
Office européen des brevets

(11) **EP 3 838 970 B1**

(12) **EUROPEAN PATENT SPECIFICATION**

(45) Date of publication and mention
of the grant of the patent:
**15.05.2024 Bulletin 2024/20**

(21) Application number: **19889684.7**

(22) Date of filing: **01.11.2019**

(51) International Patent Classification (IPC):
*C08J 5/24* (2006.01)   *C08G 18/08* (2006.01)
*C08G 18/16* (2006.01)   *C08G 18/18* (2006.01)
*C08G 18/20* (2006.01)   *C08G 18/58* (2006.01)
*C08G 18/76* (2006.01)   *C08G 59/40* (2006.01)
*C08L 63/00* (2006.01)

(52) Cooperative Patent Classification (CPC):
(C-Sets available)
**C08J 5/243; C08G 18/0842; C08G 18/168;
C08G 18/1875; C08G 18/2027; C08G 18/58;
C08G 18/7664; C08G 18/7671; C08G 59/4021;
C08L 63/00;** C08G 2120/00; C08J 2363/00;
C08J 2479/00                              (Cont.)

(86) International application number:
**PCT/JP2019/042995**

(87) International publication number:
**WO 2020/110599 (04.06.2020 Gazette 2020/23)**

(54) **SHEET MOLDING COMPOUND AND FIBER-REINFORCED COMPOSITE MATERIAL**

BAHNFORMVERBINDUNG UND FASERVERSTÄRKTES VERBUNDSTOFFMATERIAL

MÉLANGE À MOULER EN FEUILLES ET MATÉRIAU COMPOSITE RENFORCÉ PAR DES FIBRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.11.2018 JP 2018220984**

(43) Date of publication of application:
**23.06.2021 Bulletin 2021/25**

(73) Proprietor: **Toray Industries, Inc.
Tokyo 103-8666 (JP)**

(72) Inventors:
• **ISHIKAWA, Norikazu
Nagoya-shi, Aichi 455-8502 (JP)**
• **HONDO, Kazunori
Nagoya-shi, Aichi 455-8502 (JP)**
• **TOMIOKA, Nobuyuki
Nagoya-shi, Aichi 455-8502 (JP)**

(74) Representative: **Mewburn Ellis LLP
Aurora Building
Counterslip
Bristol BS1 6BX (GB)**

(56) References cited:
**EP-A1- 1 566 394        WO-A1-2017/110533
WO-A1-2017/195607        WO-A1-2017/195607
WO-A1-2018/117180        WO-A1-2020/027126
JP-A- 2013 049 749        JP-A- 2014 095 034
US-B1- 6 596 373**

EP 3 838 970 B1

- **Karaeva A. R. ET AL: "Carbon Fiber-Reinforced Polyurethane Composites with Modified Carbon-Polymer Interface" In: "Proceedings of the Scientific-Practical Conference "Research and Development - 2016"", 5 December 2017 (2017-12-05), Springer International Publishing, Cham, XP055830824, ISBN: 978-3-319-62870-7 pages 415-420, DOI: 10.1007/978-3-319-62870-7_44, Retrieved from the Internet: URL:http://link.springer.com/content/pdf/1 0.1007/978-3-319-62870-7_44> * abstract * * Introduction & Experimental section; page 416 - page 417 ***
- **BEDNARCZYK PAULINA ET AL: "Synthesis of Epoxy Methacrylate Resin and Coatings Preparation by Cationic and Radical Photocrosslinking", MOLECULES, vol. 26, no. 24, 1 December 2021 (2021-12-01), page 7663, XP093057361, DOI: 10.3390/molecules26247663**

(52)   Cooperative Patent Classification (CPC): (Cont.)

C-Sets
**C08L 63/00, C08L 75/04**

**Description**

TECHNICAL FIELD

The present invention relates to a sheet molding compound preferably used for a fiber-reinforced composite material such as an aerospace member and an automobile member, and a fiber-reinforced composite material using the sheet molding compound.

BACKGROUND ART

The use of fiber-reinforced composite materials consisting of reinforcing fibers and matrix resins has been widely extended to the fields including aerospace, sports, and general industry fields, because fiber-reinforced composite materials make it possible to design materials that have benefits of both reinforcing fibers and matrix resins. The fiber-reinforced composite material is produced by various methods such as a prepreg method, a hand lay-up method, a filament winding method, a pultrusion method, a resin transfer molding (RTM) method, and a sheet molding compound molding method. Hereinafter, the sheet molding compound may be abbreviated as SMC.

Among these methods, the SMC molding method in which an intermediate base material composed of a matrix resin and discontinuous reinforcing fibers is molded by a heating press machine has been attracting attention in recent years because of its excellent versatility and productivity.

A conventional prepreg method is a method in which an intermediate base material called prepreg, in which continuous reinforcing fibers (one-way arranged form, woven fabric form, etc.) are impregnated with a matrix resin, is laminated in advance in a desired shape, and heated/pressurized, so that the matrix resin is cured to obtain a fiber-reinforced composite material. However, although this prepreg method is suitable for production of fiber-reinforced composite materials having high material strength required for structural material applications such as aircraft and automobiles, it requires going through many processes such as prepreg preparation and lamination, so that the materials can only be produced in small quantities, and the prepreg method is not suitable for mass production.

On the other hand, in the SMC molding method, a bundle assembly of discontinuous reinforcing fibers (usually having a fiber length of about 5 to 100 mm) is impregnated with a resin composition to be a matrix resin to form a sheet, which is thickened, whereby an intermediate base material called SMC is produced. The SMC is heated/pressurized in a molding die to be shaped, and, at the same time, the matrix resin is cured to obtain a fiber-reinforced composite material having a desired shape.

In the SMC molding method, by preparing a molding die, it is possible to mold a fiber-reinforced composite material in a short time without complicated prepreg preparation and laminating process, and, in addition, there is also an advantage that it is possible to easily mold a fiber-reinforced composite material having a complex shape.

In the SMC composed of reinforcing fibers and matrix resin, in order to adjust a ratio of the reinforcing fibers and the resin composition to a desired ratio, films attached to both sides needs to be easily peelable off during production, and it is necessary to control tackiness of the SMC so that an amount of the resin adhered to the film is reduced. On the other hand, the SMC needs to be sufficiently flexible to shape a base material into a complex mold shape. However, there is a trade-off between tackiness and flexibility, and there has been a need for an SMC having excellent flexibility while suppressing tackiness.

In response to such a situation, an SMC is disclosed in which a crystalline unsaturated polyester having a suitable melting point is used for a base resin and a polyisocyanate compound is blended therein (Patent Document 1). Furthermore, an SMC in which an epoxy resin having a hydroxyl group in the molecule and a polyisocyanate compound are blended is disclosed (Patent Document 2).

In addition, an SMC and a fibre-reinforced composite material based on said SMC, in which SMC the resinous material used is a methacrylic acid adduct of bisphenol A diglycidyl ether and the the excessive thickening with time of said SMC is suppressed while sufficient initial thickening by an isocyanate-based thickener compound is maintained is disclosed (Patent Document 3).

PRIOR ART DOCUMENTS

PATENT DOCUMENTS

Patent Document 1: Japanese Patent Laid-open Publication No. 7-179739
Patent Document 2: Japanese Patent Laid-open Publication No. 58-191723
Patent Document 3: WO 2017/195607 A1

## SUMMARY OF THE INVENTION

### PROBLEMS TO BE SOLVED BY THE INVENTION

According to the SMC described in Patent Document 1 described above, the SMC with suppressed tackiness can be obtained by blending a crystalline unsaturated polyester. However, the tackiness and the flexibility fluctuate greatly due to a change in temperature, and the tackiness and the flexibility are still incompatible.

According to the SMC described in Patent Document 2 described above, the flexible SMC can be obtained by blending an epoxy resin having a hydroxyl group in the molecule and a polyisocyanate compound. However, a viscosity of a resin composition is low, and the SMC is sticky; therefore, it was difficult to peel off a film, and, in addition, the amount of the resin adhered to the film is large, resulting in insufficient control of the tackiness of the SMC.

As described above, in the prior art, it has not been possible to achieve both the above-mentioned tackiness and flexibility. Thus, an object of the present invention is to improve the drawbacks of the prior art, to provide an SMC having excellent flexibility while suppressing tackiness, and further to provide, by using such an SMC, a fiber-reinforced composite material having few voids after molding.

### SOLUTIONS TO THE PROBLEMS

In order to solve such a problem, a sheet molding compound of the present invention has the following constitution. That is, the sheet molding compound of the present invention is a sheet molding compound which is composed of a reinforcing fiber and a resin composition, has a weight content of the reinforcing fiber of 40% or more and 60% or less, has a porosity of 5% by volume or more and 30% by volume or less, and satisfies the following formulas in dynamic viscoelasticity measurement at 25°C:

$$10^5 \text{ Pa} \leq G'(s) \leq 10^9 \text{ Pa}$$

$$1 \leq G'(s)/G''(s) \leq 5$$

G'(s): Storage modulus [Pa] of sheet molding compound at 25°C
G"(s): Loss modulus [Pa] of sheet molding compound at 25°C,

wherein the resin composition is a thermosetting resin composition, and the resin composition comprises a component (A), and a component (B):

component (A): an isocyanate compound
component (B): an epoxy resin having one or more hydroxyl groups and two or more epoxy groups in one molecule,

wherein the component (A) and the component (B) in the resin composition satisfy the following formula:

$$1 \leq I/W \leq 2$$

I: Number of isocyanate groups of component (A) in resin composition
W: Total number of hydroxyl groups in resin composition.

A fiber-reinforced composite material of the present invention is obtained by curing the sheet molding compound of the present invention.

A method of producing a sheet molding compound of the present invention is a method of producing the sheet molding compound of the present invention and includes impregnating a reinforcing fiber with a resin composition and then performing heating under a condition satisfying the following formulas.

$$5000 \leq (T^{1.5} \times t) \leq 15000$$

$$25 \leq T \leq 80$$

T: thickening temperature [°C]
t: Thickening time [hour] at T

EFFECTS OF THE INVENTION

According to the present invention, it is possible to provide an SMC having excellent flexibility while suppressing tackiness, and further to provide, by using such an SMC, a fiber-reinforced composite material having few voids after molding.

EMBODIMENTS OF THE INVENTION

Preferred embodiments of the present invention will be described below. First, an SMC of the present invention will be described.

A sheet molding compound of the present invention is composed of a reinforcing fiber and a resin composition, has a weight content of the reinforcing fiber of 40% or more and 60% or less, has a porosity of 5% by volume or more and 30% by volume or less, and satisfies the following formulas in dynamic viscoelasticity measurement at 25°C:

$$10^5 \ Pa \ \leq \ G'(s) \ \leq \ 10^9 \ Pa$$

$$1 \ \leq \ G'(s)/G''(s) \ \leq \ 5$$

G'(s): Storage modulus [Pa] of sheet molding compound at 25°C
G"(s): Loss modulus [Pa] of sheet molding compound at 25°C,

wherein the resin composition is a thermosetting resin composition, and the resin composition comprises a component (A), and a component (B):

  component (A): an isocyanate compound
  component (B): an epoxy resin having one or more hydroxyl groups and two or more epoxy groups in one molecule,

wherein the component (A) and the component (B) in the resin composition satisfy the following formula:

$$1 \ \leq \ I/W \ \leq \ 2$$

  I: Number of isocyanate groups of component (A) in resin composition
  W: Total number of hydroxyl groups in resin composition.

The SMC of the present invention needs to have a weight content of the reinforcing fiber of 40% or more and 60% or less, more preferably 45% or more and 58% or less. When the weight content of the reinforcing fiber is 40% or more, stickiness of the SMC is reduced, and a preferable tackiness is developed. When the weight content of the reinforcing fiber is 60% or less, it becomes possible to sufficiently impregnate the reinforcing fibers with the resin composition.

The SMC of the present invention needs to have a porosity of 5% by volume or more and 30% by volume or less, and the porosity is more preferably 7% by volume or more and 25% by volume or less, further preferably 10% by volume or more and 20% by volume or less. When the porosity is 5% by volume or more, voids in the SMC are deformed according to deformation of the SMC, so that a flexible SMC can be obtained while suppressing the tackiness of the resin composition. When the porosity is 30% by volume or less, a porosity in a fiber-reinforced composite material obtained by curing the SMC by press molding becomes low. The porosity is an average value of values obtained by observing a cross-section of an SMC cured product, obtained by curing the SMC at a temperature ramp rate of 0.5°C/min and an ordinary pressure until a degree of cure reaches 90%, with an oblique optical microscope, calculating a total cross-section area of voids from a cross-section image including an entire thickness in the field of view, and dividing the total cross-section area by a cross-section area of the SMC cured product. The void means a void area whose periphery is surrounded by reinforcing fibers or a cured resin inside the SMC cured product, and the total cross-section area of the void is a total of cross-section areas of the voids obtained from the cross-section image. The cross-section area of the SMC cured product is a sum of areas of the reinforcing fibers, the cured resin, and the voids obtained from the cross-section image.

The degree of cure is a value obtained by subtracting a ratio of a residual calorific value of the fiber-reinforced composite material from 100% when a calorific value of the uncured SMC is 100%. The calorific value is an area of a convex exothermic peak due to a resin curing reaction in a heat flow curve showing the temperature on the horizontal axis with a heat flow per unit weight measured by differential scanning calorimetry (DSC) as the vertical axis. Examples of a measuring device used for differential scanning calorimetry include Pyris1 DSC (manufactured by PerkinElmer Co., Ltd.). Specifically, the SMC is collected in an aluminum sample pan, and the heat flow curve can be obtained by carrying out measurement at a temperature ramp rate of 10°C/min in a temperature range of 0 to 300°C in a nitrogen atmosphere. As for the porosity, for example, by adjusting a thickening temperature, it is possible to easily maintain a state that voids are included at the time of thickening, so that the porosity can be controlled. The porosity can also be controlled by the weight content of the reinforcing fiber and a content of a component (C).

A number average length of the voids in the SMC of the present invention is preferably 10 um or more and 2000 um or less. The number average length is more preferably 20 um or more and 1000 um or less. When the number average length of the voids is 10 um or more, the voids are deformed according to deformation when the SMC is bent, and the flexibility is easily developed. When the number average length of the voids is 2000 um or less, the porosity in the fiber-reinforced composite material obtained by curing the SMC by press molding tends to be low. Here, the number average length of the voids in the SMC is a number average length obtained by observing the cross-section of the SMC cured product, obtained by curing the SMC at a temperature ramp rate of 0.5°C/min and an ordinary pressure until the degree of cure reaches 90%, with an oblique optical microscope and measuring the major axes of any 100 voids. The major axis is a long side of a circumscribed rectangle whose area circumscribed by the void is minimum. As for the number average length of the voids, for example, by adjusting the thickening temperature, it is possible to easily maintain a state that the voids are dispersed at the time of thickening, so that the number average length of the voids can be controlled. The number average length of the voids can also be controlled by the weight content of the reinforcing fiber and the content of the component (C).

The SMC of the present invention preferably contains voids composed of carbon dioxide. Carbon dioxide is a gas with high solubility in the resin composition. Thus, the voids composed of carbon dioxide are easily eliminated by press molding, and the porosity in the fiber-reinforced composite material is easily reduced.

The SMC of the present invention has a storage modulus G'(s) of $10^5$ Pa or more and $10^9$ Pa or less, more preferably $5 \times 10^5$ Pa or more and $10^8$ Pa or less in dynamic viscoelasticity measurement at 25°C. When the storage modulus G'(s) of the SMC is $10^5$ Pa or more, the tackiness of the SMC is suppressed, and a film can be easily peeled off. When the storage modulus G'(s) of the SMC is $10^9$ Pa or less, the tackiness of the SMC is sufficient, and the laminated SMCs can be sufficiently adhered to each other.

The SMC of the present invention needs to satisfy the following formula in the dynamic viscoelasticity measurement at 25°C.

$$1 \leq G'(s)/G''(s) \leq 5$$

G'(s): Storage modulus [Pa] of sheet molding compound at 25°C

G"(s): Loss modulus [Pa] of sheet molding compound at 25°C

More preferably, $1.5 \leq G'(s)/G''(s) \leq 4$.

When G'(s)/G"(s) is 1 or more, flowability of the SMC is suppressed, and a sheet form can be maintained. When G'(s)/G"(s) is 5 or less, the SMC is sufficiently flexible and can be shaped even in a complex mold.

For the measurement of dynamic viscoelasticity, for example, ARES-G2 (manufactured by TA Instruments, Inc.) can be used. A test piece is cut out from the SMC, and the ARES-G2 is used to set a gap to 30 mm, and thus to apply a traction cycle of 1.0 Hz. The storage modulus G'(s) and the loss modulus G"(s) can be measured by measurement at a temperature ramp rate of 5.0°C/min in a temperature range of 0 to 70°C. The storage modulus G'(s) at 25°C can be controlled within the above range by controlling formation of a covalent bond between an isocyanate group and a hydroxyl group, for example, by adjusting the thickening temperature. For example, the storage modulus G'(s) can also be controlled by a blending amount of a component (B). In addition, the storage modulus G'(s) can also be controlled by changing an amount of carbon fibers that affect stiffness, for example, by adjusting the weight content of the reinforcing fiber. G'(s)/G"(s) can be controlled within the above range by changing the molecular weight and amount of cross-linking of the resin composition in the SMC, for example, by controlling formation of the covalent bond between an isocyanate group and a hydroxyl group. For example, G'(s)/G"(s) can also be controlled by the blending amount of the component (B).

The SMC of the present invention preferably has a storage modulus G'(s) at 70°C of $10^5$ Pa or more and $10^7$ Pa or less. The storage modulus G'(s) is more preferably $5 \times 10^5$ Pa or more and $5 \times 10^6$ Pa or less. When the storage modulus G'(s) of the SMC is $10^5$ Pa or more, the deformation and flow of a sheet are suppressed when the SMC is stored for a long period of time, and a good life can be easily obtained. When the storage modulus G'(s) of the SMC is $10^7$ Pa or less, the SMC flows to an end of a die during press molding, and a fiber-reinforced composite material without underfill can be obtained. The storage modulus G'(s) at 70°C can be controlled within the above range by controlling an amount of formation of the covalent bond between an isocyanate group and a hydroxyl group, for example, by the blending amount of the component (B). In addition, the storage modulus G'(s) can also be controlled by changing the amount of carbon fibers that affect stiffness, for example, by adjusting the weight content of the reinforcing fiber.

It is preferable to satisfy the following formula in the dynamic viscoelasticity measurement at 25°C of the resin composition used in the SMC of the present invention.

$$10^4 \text{ Pa} \leq \text{G}'(r) \leq 10^8 \text{ Pa}$$

$$1 \leq \text{G}'(r)/\text{G}''(r) \leq 30$$

G'(r): Storage modulus [Pa] of resin composition at 25°C
G"(r): Loss modulus [Pa] of resin composition at 25°C.

When the above two formulas are satisfied simultaneously, it is possible to easily develop excellent flexibility while suppressing the tackiness of the SMC.

In the dynamic viscoelasticity measurement at 25°C of the resin composition used in the SMC of the present invention, the storage modulus G'(r) is preferably $10^4$ Pa or more and $10^8$ Pa or less, more preferably $5 \times 10^4$ Pa or more and $10^6$ Pa or less. When the storage modulus G' (r) of the resin composition is $10^4$ Pa or more, the tackiness of the SMC is easily suppressed, and the film can be easily peeled off. When the storage modulus G'(r) of the resin composition is $10^8$ Pa or less, the tackiness of the SMC is sufficient, and adhesiveness between the laminated SMCs is improved. The storage modulus G'(r) at 25°C can be controlled within the above range by controlling formation of the covalent bond between an isocyanate group and a hydroxyl group, for example, by adjusting the thickening temperature. For example, the storage modulus G'(r) can also be controlled by a blending amount of the component (B). G'(r)/G"(r) can be controlled within the above range by changing the molecular weight and amount of cross-linking of the resin composition in the SMC, for example, by controlling formation of the covalent bond between an isocyanate group and a hydroxyl group

For example, the storage modulus G'(r) can also be controlled by a blending amount of the component (B).

The resin composition used in the SMC of the present invention preferably satisfies the following formula in the dynamic viscoelasticity measurement at 25°C.

$$1 \leq \text{G}'(r)/\text{G}''(r) \leq 30$$

More preferably, $2 \leq \text{G}'(r)/\text{G}''(r) \leq 20$ is satisfied.

When G'(r)/G"(r) is 1 or more, the flowability of the SMC is suppressed, and the sheet form is easily maintained. When G'(r)/G"(r) is 30 or less, the flexibility of the SMC is further improved, and the SMC can be easily shaped even in a complex mold.

The resin composition used for the SMC of the present invention contains various commonly used resins that are applicable in the range satisfying features of the present invention. As such resins, for example, both thermosetting resins (according to the invention) and thermoplastic resins (not according to the invention) may be used. As the thermosetting resin, for example, epoxy resin, unsaturated polyester resin, vinyl ester resin, phenol resin, epoxy acrylate resin, urethane acrylate resin, phenoxy resin, alkyd resin, urethane resin, maleimide resin, cyanate resin, can be preferably applied. As the thermoplastic resin, for example, polyamide, polyacetal, polyacrylate, polysulfone, ABS, polyester, acryl, polybutylene terephthalate (PBT), polyethylene terephthalate (PET), polyethylene, polypropylene, polyphenylene sulfide (PPS), polyether ether ketone (PEEK), liquid crystal polymer, vinyl chloride, fluorine-based resin such as polytetrafluoroethylene, silicone, can be preferably applied. Among these resins, when a thermosetting resin is used, it is more preferable because its viscosity at room temperature is lower than that of a thermoplastic resin and its impregnating property into reinforcing fibers is excellent.

When a thermosetting resin is used as the resin composition used in the SMC of the present invention, the thermosetting resin is a component in which a curing reaction proceeds by heating to form a cross-linking structure, and is preferably a monomer component. For example, thermosetting components such as a compound having an epoxy group, a compound having a phenol group, a compound having a vinyl group, a compound having a bismaleimide structure, a compound having an isocyanate group, an oxazine compound, a compound having a hydroxyl group, and a compound having an amino group can be used.

Among the above-mentioned thermosetting resins, the thermosetting resin preferably contains an epoxy resin from the viewpoint of adhesiveness to reinforcing fibers and handleability. When the epoxy resin is contained as the thermosetting resin, it means that a compound having two or more epoxy groups per molecule is contained. Such an epoxy resin may be formed of only one type of compound having an epoxy group, or may be a mixture of a plurality of types.

When a thermosetting resin is used as the resin composition used in the SMC of the present invention, the thermosetting resin preferably contains a curing agent. Here, the curing agent is a component that cures the thermosetting resin by covalently bonding when the component is compatible with the thermosetting resin. When the thermosetting resin is an epoxy resin, a compound having an active group capable of reacting with an epoxy group can be used as the curing agent, and an amine compound, an acid anhydride, a phenolic compound can be used. Among these, dicyandiamide or a derivative thereof is particularly preferable. Dicyandiamide is excellent in giving high mechanical properties and heat resistance to a resin fiber-reinforced composite material, and is widely used as a curing agent for epoxy resins. Moreover, dicyandiamide is excellent in preservation stability of an epoxy resin composition and therefore can be preferably used. Among these, one kind may be used singly, or two or more kinds may be used in combination.

In the SMC of the present invention, the resin composition contains an isocyanate compound as a component (A). The isocyanate compound of the component (A) is not particularly limited as long as it is a component that increases the viscosity of the resin composition by formation of the covalent bond between an isocyanate group and a hydroxyl group at 25°C, and has one or more isocyanate groups on average in one molecule, and known aliphatic isocyanate and aromatic isocyanate can be used. A prepolymer obtained by prepolymerizing these isocyanate compounds with a polyol compound may be used. In addition, these polyisocyanate compounds may be used alone or in combination of two or more. The isocyanate compound used in the present invention preferably contains a polyisocyanate compound having 2 or more and 6 or less isocyanate groups in one molecule. When the number of isocyanate groups is 2 or more, the resin composition can be sufficiently thickened, and when the number of isocyanate groups is 6 or less, the SMC develops excellent flexibility, which is preferable.

In the SMC of the present invention, the resin composition contains a hydroxyl group-containing epoxy resin as the component (B). The hydroxyl group-containing epoxy resin of the component (B) is not particularly limited as long as it is a component that increases the viscosity of the resin composition by forming a covalent bond with the component (A), and is an epoxy resin having one or more hydroxyl groups and two or more epoxy groups in one molecule, and known aromatic epoxy resin and aliphatic epoxy resin can be used.

In the SMC of the present invention, the component (A) and the component (B) in the resin composition satisfy the following formula.

$$1 \leq I/W \leq 2$$

I: Number of isocyanate groups of component (A) in resin composition W: Total number of hydroxyl groups in resin composition.

More preferably, $1.1 \leq I/W \leq 2$, and further preferably, $1.2 \leq I/W \leq 1.8$. When I/W is 1 or more, the SMC is easy enough to thicken even when some of the isocyanate groups in the component (A) are difficult to react with the hydroxyl groups when the resin composition is prepared, and therefore it is preferable. When I/W is 2 or less, the SMC develops greater flexibility, which is preferable.

In the SMC of the present invention, it is preferable that the resin composition contains at least one compound selected from the group consisting of a quaternary ammonium salt, a phosphonium salt, an imidazole compound, and a phosphine compound as the component (C). When the component (C) is at least one compound selected from the group consisting of a quaternary ammonium salt, a phosphonium salt, an imidazole compound, and a phosphine compound, it shows that one type selected from the group consisting of the above compounds can be used singly, or two or more types can be used in combination. Among these, the quaternary ammonium salt and/or the phosphine compound is more preferable as the component (C) because a curing time can be significantly shortened.

In the SMC of the present invention, when an epoxy acrylate resin is contained as a thermosetting resin in the resin composition, a compound having one or more, preferably two or more vinyl groups in one molecule is contained from the viewpoint of curability. Such an epoxy acrylate resin may be formed of only one type of compound having a vinyl group, or may be a mixture of a plurality of types.

In the SMC of the present invention, a reactive diluent may be contained in the resin composition. The reactive diluent is not particularly limited as long as it is a compound having one or more epoxy groups or vinyl groups in one molecule, and a known reactive diluent can be used.

The reinforcing fiber used in the SMC of the present invention is not particularly limited, and examples thereof include glass fiber, carbon fiber, graphite fiber, aramid fiber, boron fiber, alumina fiber and silicon carbide fiber. Although two or more of these reinforcing fibers may be mixed and used, it is preferable to use carbon fibers or graphite fibers in order to obtain a molded article that is lighter and has higher durability. In particular, in applications where there is a high demand for weight reduction and realization of high strength of the material, it is preferable that the reinforcing fiber is carbon fiber in the SMC of the present invention because of its excellent specific elastic modulus and specific strength. As the carbon fiber, any kind of carbon fiber can be used depending on the application. However, from the viewpoint of impact resistance, a carbon fiber having a tensile modulus of at most 400 GPa is preferable. From the viewpoint of strength, since a composite material having high stiffness and mechanical strength can be obtained, carbon fibers preferably having a tensile strength of 4.4 to 6.5 GPa are used. The carbon fiber is preferably a high-strength high-elongation carbon fiber having a tensile elongation of 1.7 to 2.3%. Therefore, a carbon fiber having characteristics of having a tensile modulus of at least 230 GPa, a tensile strength of at least 4.4 GPa, and a tensile elongation of at least 1.7% is most suitable.

Although a form of the reinforcing fiber in the present invention may be continuous or discontinuous, when a member having a complicate shape is molded, it is preferable to use discontinuous fiber from the viewpoint of flowability. In this case, as the discontinuous fiber, a chopped reinforcing fiber bundle composed of short fibers is more preferable. A length of the short fiber is preferably 0.3 to 10 cm, more preferably 1 to 5 cm. When the length of the short fiber is 0.3 cm or more, a fiber-reinforced composite material having a good mechanical property can be obtained. When the length of the short fiber is 10 cm or less, a molding material for fiber-reinforced composite material having a good flowability during press molding can be obtained. In addition, it is preferable that an average fiber diameter of the short fibers is 3 to 12 um and a basis weight of the reinforcing fiber is 0.1 to 5 kg/m$^2$.

A production method for the SMC of the present invention is a method of producing the SMC of the present invention and preferably includes impregnating a reinforcing fiber with a resin composition and then performing heating under a condition satisfying the following formulas.

$$5000 \leq (T^{1.5} \times t) \leq 15000$$

$$25 \leq T \leq 80$$

T: thickening temperature [°C]
t: Thickening time [hour] at T.

By maintaining a heated state in the above heating step, the resin composition is brought into a semi-cured condition in which an increase in viscosity of the resin composition is saturated, so that the SMC of the present invention can be easily obtained.

A preferable example of the method of producing the SMC of the present invention is as follows. That is, the resin composition is applied onto the respective two polypropylene films using a doctor blade, to prepare two resin sheets. Next, a large number of short fiber bundles are uniformly sprayed on a surface of the resin composition of one of the obtained resin sheets, and the other resin sheet is laminated on the surface on which the short fiber bundles of the obtained resin sheet are sprayed such that a surface of a matrix resin comes inside, to produce an SMC sheet. By using this method, it is possible to make it easy to sufficiently impregnate the reinforcing fibers with the resin composition.

In the method of producing the SMC of the present invention, the following formula is satisfied with respect to conditions of temperature and time for realizing the semi-cured condition in the heating step.

$$5000 \leq (T^{1.5} \times t) \leq 15000$$

$$25 \leq T \leq 80$$

T: thickening temperature [°C]
t: Thickening time [hour] at T.

More preferably, $6500 \leq (T^{1.5} \times t) \leq 13500$.

A suitable semi-cured condition can be controlled by a chemical reaction of the resin composition. That is, reactivity of the target chemical reaction changes greatly depending on the thickening temperature. A reaction rate of the chemical reaction can be adjusted by the thickening time. Thus, when the range of the above formula is satisfied, the resin composition can be easily put into a suitable semi-cured condition. Here, the thickening temperature is a temperature at which the SMC sheet produced by the above method is heated, and is preferably 25°C or higher and 80°C or lower. When the thickening temperature is 25°C or higher, the resin composition before impregnating the reinforcing fiber does not thicken at room temperature and is excellent in handleability. When the thickening temperature is 80°C or lower, the curing does not proceed unnecessarily, and the semi-cured condition can be maintained. The above T can be arbitrarily selected as long as it is within the above range, and a plurality of Ts may be selected. When a plurality of such Ts are selected, it is preferable that a total of each $T^{1.5} \times t$ does not exceed the above range.

The fiber-reinforced composite material of the present invention is obtained by curing the SMC of the present invention. By using such SMC, a fiber-reinforced composite material having few voids after molding can be obtained. By reducing the voids, the fiber-reinforced composite material tends to have excellent quality.

As a method of producing the fiber-reinforced composite material of the present invention, various methods such as a press forming method, a film bag molding method, and an autoclave molding method can be used. Among these methods, the press forming method is particularly preferably used from the viewpoint of productivity and flexibility in a shape of a molding. The method of producing the fiber-reinforced composite material of the present invention will be described using an example of the press forming method. The fiber-reinforced composite material of the present invention can be produced by, for example, placing the SMC of the present invention in a molding die heated to a specific temperature, and then pressurizing/heating the SMC by a press to flow the SMC and fill a mold, and thus to cure the SMC as it is.

EMBODIMENT

Hereinafter, the present invention will be described in more detail with reference to Examples.

\<Resin raw material\>

The following raw materials were used to obtain the SMC of each example. The numerical value of each component in a column of the resin composition in a table indicates a content, and a unit thereof is "part(s) by mass" unless otherwise specified.

1. Isocyanate compound which is component (A)

· "Luplanate (registered trademark)" M20S (manufactured by BASF INOAC Polyurethanes Ltd.): Polymeric MDI (polymethylene polyphenyl polyisocyanate: having a structure in which a plurality of MDIs are linked by a methylene group)
· "Lupranate (registered trademark)" MI (manufactured by BASF INOAC Polyurethanes Ltd.): Monomeric MDI (diphenylmethane diisocyanate).

2. Hydroxy group-containing epoxy which is component (B)

· "Epotohto (registered trademark)" YD128 (manufactured by Nippon Steel & Sumikin Chemical Co., Ltd., containing epoxy having one or more hydroxyl groups in one molecule): Bisphenol A epoxy resin
· "DENACOL (registered trademark)" EX614B (manufactured by Nagase ChemteX Corporation, containing epoxy having one or more hydroxyl groups in one molecule): Sorbitol type epoxy resin.

3. Compound of component (C)

· Tetrabutylammonium bromide (manufactured by Tokyo Chemical Industry Co., Ltd.)
· Tetraphenylphosphonium bromide (manufactured by Tokyo Chemical Industry Co., Ltd.)
· 2-Methylimidazole (manufactured by Tokyo Chemical Industry Co., Ltd.)
· Triphenylphosphine (manufactured by Tokyo Chemical Industry Co., Ltd.).

4. Other compounds

· [Epoxy acrylate resin] "Epoxy ester (registered trademark)" 3000A (manufactured by Kyoeisha Chemical Co., Ltd.): Bisphenol A diglycidyl ether acrylic acid adduct
· [Reactive diluent] Styrene (manufactured by Tokyo Chemical Industry Co., Ltd.)
· [Curing agent] t-butyl perbenzoate (manufactured by Tokyo Chemical Industry Co., Ltd.)
· "jERcure (registered trademark)" DICY7 (manufactured by Mitsubishi Chemical Corporation): dicyandiamide.

<Reinforcing fiber raw material>

· "Torayca (registered trademark)" T700S-12K (manufactured by Toray Industries, Inc.).

(Preparation of resin composition)

Each component was mixed at the content ratio shown in the table to prepare a resin composition.

(Production of SMC)

"Torayca (registered trademark)" T700S-12K (manufactured by Toray Industries, Inc.) was used as a carbon fiber. The continuous carbon fiber strands were cut at a desired angle and sprayed so as to be uniformly dispersed to obtain a discontinuous carbon fiber non-woven fabric having an isotropic fiber orientation. A rotary cutter was used as a cutting device. A distance between blades was 30 mm. A basis weight of the discontinuous carbon fiber non-woven fabric was 1 kg/m$^2$.
A sheet-shaped SMC sheet was obtained by impregnating the discontinuous carbon fiber non-woven fabric with the above resin composition with a roller so that a carbon weight content of the reinforcing fiber of a molding material became the value shown in the table. The SMC sheet obtained from the above was heated according to the temperature and time conditions shown in the table to bring the resin composition into the semi-cured condition, and thus to obtain the SMC.

(Production of fiber-reinforced composite material)

Using the above SMC, the SMC was cured under a pressure of 10 MPa with a pressure press under conditions of about 140°C for 30 minutes to obtain a flat fiber-reinforced composite material having a size of 300 × 400 mm.

(Evaluation)

The evaluation in each example was performed as follows. The number of measurements n is n = 1 unless otherwise specified.

1. Dynamic viscoelasticity measurement of resin composition in semi-cured condition

A test piece with a width of 12.7 mm and a thickness of 2.0 mm was cut out from the resin composition, and ARES-G2 (manufactured by TA Instruments, Inc.) was used to set a gap to 30 mm, and thus to apply a traction cycle of 1.0 Hz. The storage modulus G'(r) and the loss modulus G"(r) were measured by measurement at a temperature ramp rate of 5.0°C/min in a temperature range of 0 to 70°C, and the storage modulus G'(r) and the loss modulus G"(r) at each temperature were defined as the storage modulus G'(r) and the loss modulus G"(r) at that temperature condition. For example, for the storage modulus G'(r) at 25°C, the storage modulus G' when a sample reached 25°C was defined as the storage modulus G'(r) at 25°C. As the sample, the resin composition in which each component was mixed was held at the temperature shown in the table for the time shown in the table.

2. Dynamic viscoelasticity measurement of SMC

A test piece with a width of 12.7 mm was cut out from the SMC, and ARES-G2 (manufactured by TA Instruments, Inc.) was used to apply a traction cycle of 1.0 Hz, and thus to set a gap to 30 mm. The storage modulus G'(s) and the loss modulus G"(s) were measured by measurement at a temperature ramp rate of 5.0°C/min in a temperature range of 0 to 70°C, and the storage modulus G'(s) and the loss modulus G"(s) at each temperature were defined as the storage modulus G'(s) and the loss modulus G"(s) at that temperature condition. For example, for the storage modulus G'(s) at 25°C, the storage modulus G'(s) when a sample reached 25°C was defined as the storage modulus G'(s) at 25°C.

Similarly, the storage modulus G'(s) and the loss modulus G"(s) when the sample reached 70°C were defined as the storage modulus G' (s) and the loss modulus G"(s) at 70°C. As the sample, the SMC in which each component was mixed was held at the temperature shown in the table for the time shown in the table.

3. Measurement of degree of cure of SMC cured product

17 mg of the SMC was collected in an aluminum sample pan, and Pyris1 DSC (manufactured by Perkin Elmer Co., Ltd.) was used, an area of a convex exothermic peak due to a resin curing reaction in a heat flow curve obtained by carrying out measurement at a temperature ramp rate of 10°C/min in a temperature range of 0 to 300°C in a nitrogen atmosphere was taken as the calorific value of the SMC. Next, 17 mg of a cured product obtained by curing the SMC from 60°C to 160°C at a temperature ramp rate of 0.5°C/min and an ordinary pressure was collected in an aluminum sample pan, and Pyris1 DSC (manufactured by Perkin Elmer Co., Ltd.) was used, the area of the convex exothermic peak due to the resin curing reaction in the heat flow curve obtained by carrying out measurement at a temperature ramp rate of 10°C/min in a temperature range of 0 to 300°C in a nitrogen atmosphere was taken as a residual calorific value of the cured product. Measurement was carried out so that the degree of cure was a value obtained by subtracting a ratio of the residual calorific value of the cured product from 100% when the calorific value of the SMC was 1000.

4. Measurement of porosity in SMC

A smooth-polished cross-section of an SMC cured product obtained by curing the SMC at a temperature ramp rate of 0.5°C/min and an ordinary pressure until the degree of cure reached 90% was observed with an oblique optical microscope at a magnification of 100 times. A cross-section image including, in the field of view, 3 mm in a surface direction and the entire thickness of the SMC cured product in the thickness direction was created from any five locations, and a value obtained by dividing a total cross-section area of voids by a cross-section area of the SMC cured product for each cross-sectional image was calculated to obtain an average value.

5. Measurement of number average length of voids in SMC

The number average length was measured, which was obtained by observing the cross-section of the SMC cured product, obtained by curing the SMC at a temperature ramp rate of 0.5°C/min and an ordinary pressure until the degree of cure reached 90%, with an oblique optical microscope at a magnification of 100 times and measuring the major axes of any 100 voids. The major axis is a long side of a circumscribed rectangle whose area circumscribed by the void is minimum.

6. Evaluation of tackiness of SMC

The tackiness of the SMC was compared and evaluated in the following three grades. When a polypropylene film (Wani-jirushi poly sheet transparent # 150 (manufactured by Nichidai Industry Co., Ltd.)) was peeled off from the SMC, produced by the above production method, at room temperature, an original SMC mass was set to 100%. When an amount remaining on the film was less than 3%, it was evaluated as "A". When the amount remaining on the film was less than 1%, and when the amount was 3% or more and less than 5%, it was evaluated as "B". When the amount remaining on the film was 5% or more, it was evaluated as "C".

7. Measurement of porosity in fiber-reinforced composite material

The porosity in the fiber-reinforced composite material was compared and evaluated in the following three grades. When the porosity in the fiber-reinforced composite material was less than 1% and therefore substantially no void was present, it was evaluated as "A". When the porosity in the fiber-reinforced composite material was 1% or more and less than 2%, it was evaluated as "B". When the porosity in the fiber-reinforced composite material was 2% or more, it was evaluated as "C".

For the porosity in the fiber-reinforced composite material, a surface obtained by smoothly polishing a cross-section arbitrarily selected with the smoothly-polished fiber-reinforced composite material was observed with an oblique optical microscope at a magnification of 100 times, a cross-section image including, in the field of view, 3 mm in the surface direction and the entire thickness of the fiber-reinforced composite material in the thickness direction was created from any five locations, and a value obtained by dividing a total cross-section area of the voids by a cross-section area of the fiber-reinforced composite material for each cross-sectional image was calculated to obtain an average value. This average value was taken as the porosity.

(Example 1) (not according to the invention)

24 parts of M20S, 50 parts of epoxy ester 3000A, 50 parts of styrene, and 0.1 parts of t-butyl perbenzoate were added so that the blending amounts of the component (A) and other components were the content ratios shown in Table 1, the resin composition was prepared, and held at 40°C for 24 hours so as to meet the conditions shown in Table 1, and then the storage modulus G'(r) and the loss modulus G"(r) at 25°C of the obtained resin composition in the semi-cured condition were measured to calculate G'(r)/G"(r). An SMC sheet having a weight content of the reinforcing fiber of 40% was produced using the resin composition and a discontinuous carbon fiber non-woven fabric so as to meet the conditions shown in Table 1, and the storage modulus G' and the loss modulus G"(s) at 25°C of the SMC obtained by holding at 40°C for 24 hours were measured to calculate G' (s)/G"(s). In addition, the storage modulus G' (s) at 70°C was measured. In addition, the porosity and the number average length of voids were measured from the cross-section of the SMC cured product obtained by curing the SMC at a temperature ramp rate of 0.5°C/min and an ordinary pressure until the degree of cure reached 90%. In addition, a fiber-reinforced composite material was prepared using the SMC, and the porosity was measured. First, regarding the resin composition, the storage modulus G' (r) at 25°C satisfied the range of $10^4$ Pa $\leq$ G' (r) $\leq 10^8$ Pa, and G'(r)/G"(r) satisfied the range of $1 \leq$ G' (r) /G" (r) $\leq 30$. Regarding the SMC, the storage modulus G'(s) at 25°C satisfied the range of $10^5$ Pa $\leq$ G'(s) $\leq 10^9$ Pa, and G' (s)/G"(s) satisfied the range of $1 \leq$ G'(s)/G"(s) $\leq 5$, and the porosity of the SMC satisfied the range of 5% by volume or more and 30% by volume or less. The number average length of voids of the SMC satisfied the range of 10 um or more and 2000 um or less, and the obtained SMC showed good flexibility. In addition, regarding the SMC, the storage modulus G' (s) at 70°C satisfied a range of $10^4$ Pa $\leq$ G'(s) $\leq 10^7$ Pa, and the obtained SMC showed good flexibility even in environment of room temperature or higher. The tackiness of the SMC was good at B or higher, and the porosity of the fiber-reinforced composite material was also good at B or higher.

(Example 2) (not according to the invention)

24 parts of M20S, 40 parts of epoxy ester 3000A, 60 parts of styrene, and 0.1 parts of t-butyl perbenzoate were added so that the blending amounts of the component (A) and other components were the content ratios shown in Table 1, the resin composition was prepared, and held at 40°C for 24 hours so as to meet the conditions shown in Table 1, and then the storage modulus G'(r) and the loss modulus G"(r) at 25°C of the obtained resin composition in the semi-cured condition were measured to calculate G'(r)/G"(r). An SMC sheet having a weight content of the reinforcing fiber of 40% was produced using the resin composition and a discontinuous carbon fiber non-woven fabric so as to meet the conditions shown in Table 1, and the storage modulus G' and the loss modulus G"(s) at 25°C of the SMC obtained by holding at 40°C for 24 hours were measured to calculate G' (s)/G"(s). In addition, the storage modulus G' (s) at 70°C was measured. In addition, the porosity and the number average length of voids were measured from the cross-section of the SMC cured product obtained by curing the SMC at a temperature ramp rate of 0.5°C/min and an ordinary pressure until the degree of cure reached 90%. In addition, a fiber-reinforced composite material was prepared using the SMC, and the porosity was measured. First, regarding the resin composition, the storage modulus G' (r) at 25°C satisfied the range of $10^4$ Pa $\leq$ G' (r) $\leq 10^8$ Pa, and G'(r)/G"(r) satisfied the range of $1 \leq$ G'(r)/G"(r) $\leq 30$. Regarding the SMC, the storage modulus G'(s) at 25°C satisfied the range of $10^5$ Pa $\leq$ G'(s) $\leq 10^9$ Pa, and G' (s)/G"(s) satisfied the range of $1 \leq$ G'(s)/G"(s) $\leq 5$, and the porosity of the SMC satisfied the range of 5% by volume or more and 30% by volume or less. The number average length of voids of the SMC satisfied the range of 10 um or more and 2000 um or less, and the obtained SMC showed good flexibility. In addition, regarding the SMC, although the storage modulus G'(s) at 70°C was a small value of $0.8 \times 10^5$ Pa, the obtained SMC showed good flexibility even in environment of room temperature or higher. The tackiness of the SMC was good at B or higher, and the porosity of the fiber-reinforced composite material was also good at B or higher.

(Examples 3 to 12)

As described above, the resin composition was prepared so that the blending amounts of the component (A), the component (B), and other components were the content ratios shown in Table 1-1 or Table 1-2, and the storage modulus G' and the loss modulus G"(r) at 25°C of the resin composition in the semi-cured condition obtained by being produced so as to meet the conditions shown in Table 1-1 or Table 1-2 were measured to calculate G'(r)/G"(r). In addition, the storage modulus G'(s) and the loss modulus G"(s) at 25°C of the SMC obtained by being produced so as to meet the conditions shown in Table 1-1 or Table 1-2 were measured to calculate G'(s)/G"(s). In addition, the storage modulus G'(s) at 70°C was measured. In addition, the porosity and the number average length of voids were measured from the cross-section of the SMC cured product obtained by curing the SMC at a temperature ramp rate of 0.5°C/min and an ordinary pressure until the degree of cure reached 90%. In addition, a fiber-reinforced composite material was prepared using the SMC, and the porosity was measured. First, regarding the resin composition, the storage modulus G'(r) at 25°C satisfied the range of $10^4$ Pa $\leq$ G' (r) $\leq 10^8$ Pa, and G'(r)/G"(r) satisfied the range of $1 \leq$ G'(r)/G"(r) $\leq$ 30. Regarding the SMC, the storage modulus G' (s) at 25°C satisfied the range of $10^5$ Pa $\leq$ G' (s) $\leq 10^9$ Pa, and G'(s)/G"(s) satisfied the range of $1 \leq$ G' (s) /G" (s) $\leq$ 5, and the porosity of the SMC satisfied the range of 5% by volume or more and 30% by volume or less. The number average length of voids of the SMC satisfied the range of 10 um or more and 2000 um or less, and the obtained SMC showed good flexibility. In addition, regarding the SMC, the storage modulus G'(s) at 70°C satisfied a range of $10^5$ Pa $\leq$ G' (s) $\leq 10^7$ Pa, and the obtained SMC showed good flexibility even in environment of room temperature or higher. The tackiness of the SMC was good at B or higher, and the porosity of the fiber-reinforced composite material was also good at B or higher.

(Examples 13 to 21)

As described above, the resin composition was prepared so that the blending amounts of the component (A), the component (B), the component (C), and other components were the content ratios shown in Table 1-2 or Table 2, and the storage modulus G' and the loss modulus G"(r) at 25°C of the resin composition in the semi-cured condition obtained by being produced so as to meet the conditions shown in Table 1-2 or Table 2 were measured to calculate G'(r)/G"(r). In addition, the storage modulus G' (s) and the loss modulus G"(s) at 25°C of the SMC obtained by being produced so as to meet the conditions shown in Table 1-2 or Table 2 were measured to calculate G'(s)/G"(s). In addition, the storage modulus G'(s) at 70°C was measured. In addition, the porosity and the number average length of voids were measured from the cross-section of the SMC cured product obtained by curing the SMC at a temperature ramp rate of 0.5°C/min and an ordinary pressure until the degree of cure reached 90%. In addition, a fiber-reinforced composite material was prepared using the SMC, and the porosity was measured. First, regarding the resin composition, the storage modulus G'(r) at 25°C satisfied the range of $10^4$ Pa $\leq$ G'(r) $\leq 10^8$ Pa, and G'(r)/G"(r) satisfied the range of $1 \leq$ G'(r)/G"(r) $\leq$ 30. Regarding the SMC, the storage modulus G'(s) at 25°C satisfied the range of $10^5$ Pa $\leq$ G'(s) $\leq 10^9$ Pa, and G'(s)/G"(s) satisfied the range of $1 \leq$ G'(s)/G"(s) $\leq$ 5, and the porosity of the SMC satisfied the range of 5% by volume or more and 30% by volume or less. The number average length of voids of the SMC satisfied the range of 10 um or more and 2000 um or less, and the obtained SMC showed good flexibility. In addition, regarding the SMC, the storage modulus G'(s) at 70°C satisfied a range of $10^5$ Pa $\leq$ G' (s) $\leq 10^7$ Pa, and the obtained SMC showed good flexibility even in environment of room temperature or higher. The tackiness of the SMC was good at B or higher, and the porosity of the fiber-reinforced composite material was also good at B or higher.

(Comparative Example 1)

As described above, the resin composition was prepared so that the blending amounts of the component (A), the component (B), and other components were the content ratios shown in Table 2, and the storage modulus G'(r) and the loss modulus G"(r) at 25°C of the resin composition in the semi-cured condition obtained by being produced so as to meet the conditions shown in Table 2 were measured to calculate G'(r)/G"(r). In addition, the storage modulus G'(s) and the loss modulus G"(s) at 25°C of the SMC obtained by being produced so as to meet the conditions shown in Table 2 were measured to calculate G'(s)/G"(s). In addition, the storage modulus G'(s) at 70°C was measured. In addition, the porosity and the number average length of voids were measured from the cross-section of the SMC cured product obtained by curing the SMC at a temperature ramp rate of 0.5°C/min and an ordinary pressure until the degree of cure reached 90%. In addition, a fiber-reinforced composite material was prepared using the SMC, and the porosity was measured. First, regarding the resin composition, the storage modulus G'(r) at 25°C was as low as $0.6 \times 10^4$ Pa, and G'(r)/G"(r) was as low as 0.8. Regarding the SMC, the storage modulus G'(s) at 25°C was as low as $0.8 \times 10^5$ Pa, and G'(s)/G"(s) was as low as 0.7. In addition, the porosity of the SMC was as low as 2% by volume, and the number average length of voids of the SMC was as large as 2800 um. The flexibility of the obtained SMC was poor. In addition, regarding the SMC, the storage modulus G'(s) at 70°C was as low as $0.7 \times 10^5$ Pa, and the flexibility of the obtained SMC was poor even in environment of room temperature or higher. The tackiness of the SMC was poor at C, and the porosity of the fiber-reinforced composite material was also poor at C.

(Comparative Example 2)

As described above, the resin composition was prepared so that the blending amounts of the component (A), the component (B), and other components were the content ratios shown in Table 2, and the storage modulus G'(r) and the loss modulus G"(r) at 25°C of the resin composition in the semi-cured condition obtained by being produced so as to meet the conditions shown in Table 2 were measured to calculate G'(r)/G"(r). In addition, the storage modulus G'(s) and the loss modulus G"(s) at 25°C of the SMC obtained by being produced so as to meet the conditions shown in Table 2 were measured to calculate G'(s)/G"(s). In addition, the storage modulus G'(s) at 70°C was measured. In addition, the porosity and the number average length of voids were measured from the cross-section of the SMC cured product

obtained by curing the SMC at a temperature ramp rate of 0.5°C/min and an ordinary pressure until the degree of cure reached 90%. In addition, a fiber-reinforced composite material was prepared using the SMC, and the porosity was measured. First, regarding the resin composition, the storage modulus G'(r) at 25°C satisfied $12 \times 10^4$ Pa and the range of $10^4$ Pa $\leq$ G'(r) $\leq 10^8$ Pa, and G'(r)/G"(r) was as low as 0.8. Regarding the SMC, the storage modulus G'(s) at 25°C satisfied $1.7 \times 10^5$ Pa and the range of $10^5$ Pa $\leq$ G'(s) $\leq 10^9$ Pa. G'(s)/G"(s) was as low as 0.8, and the porosity of the SMC was as high as 310 by volume. The number average length of voids of the SMC satisfied 1700 um and the range of 10 um or more and 2000 um or less. However, the flexibility of the obtained SMC was poor. In addition, regarding the SMC, the storage modulus G'(s) at 70°C was as low as $0.8 \times 10^5$ Pa, and the flexibility of the obtained SMC was poor even in environment of room temperature or higher. The tackiness of the SMC was poor at C, and the porosity of the fiber-reinforced composite material was poor at C.

(Comparative Example 3)

As described above, the resin composition was prepared so that the blending amounts of the component (A), the component (B), and other components were the content ratios shown in Table 2, and the storage modulus G'(r) and the loss modulus G"(r) at 25°C of the resin composition in the semi-cured condition obtained by being produced so as to meet the conditions shown in Table 2 were measured to calculate G'(r)/G"(r). In addition, the storage modulus G'(s) and the loss modulus G"(s) at 25°C of the SMC obtained by being produced so as to meet the conditions shown in Table 2 were measured to calculate G'(s)/G"(s). In addition, the storage modulus G'(s) at 70°C was measured. In addition, the porosity and the number average length of voids were measured from the cross-section of the SMC cured product obtained by curing the SMC at a temperature ramp rate of 0.5°C/min and an ordinary pressure until the degree of cure reached 90%. In addition, a fiber-reinforced composite material was prepared using the SMC, and the porosity was measured. First, regarding the resin composition, the storage modulus G'(r) at 25°C satisfied $12 \times 10^4$ Pa and the range of $10^4$ Pa $\leq$ G' (r) $\leq 10^8$ Pa, and G'(r)/G"(r) satisfied 6 and the range of $1 \leq$ G'(r)/G"(r) $\leq 30$. Regarding the SMC, the storage modulus G'(s) at 25°C was as low as $0.6 \times 10^5$ Pa. G'(s)/G"(s) was as low as 0.6, and the porosity of the SMC was as high as 37% by volume. The number average length of voids of the SMC satisfied 1700 um and the range of 10 um or more and 2000 um or less. However, the flexibility of the obtained SMC was poor. In addition, regarding the SMC, the storage modulus G'(s) at 70°C satisfied $1.2 \times 10^5$ Pa and the range of $10^5$ Pa $\leq$ G'(s) $\leq 10^7$ Pa, and the flexibility of the obtained SMC was good in environment of room temperature or higher. The tackiness of the SMC was poor at C, and the porosity of the fiber-reinforced composite material was poor at C.

(Comparative Example 4)

As described above, the resin composition was prepared so that the blending amounts of the component (A), the component (B), and other components were the content ratios shown in Table 2, and the storage modulus G'(r) and the loss modulus G"(r) at 25°C of the resin composition in the semi-cured condition obtained by being produced so as to meet the conditions shown in Table 2 were measured to calculate G'(r)/G"(r). In addition, the storage modulus G'(s) and the loss modulus G"(s) at 25°C of the SMC obtained by being produced so as to meet the conditions shown in Table 2 were measured to calculate G'(s)/G"(s). In addition, the storage modulus G'(s) at 70°C was measured. In addition, the porosity and the number average length of voids were measured from the cross-section of the SMC cured product obtained by curing the SMC at a temperature ramp rate of 0.5°C/min and an ordinary pressure until the degree of cure reached 90%. In addition, a fiber-reinforced composite material was prepared using the SMC, and the porosity was measured. First, regarding the resin composition, the storage modulus G'(r) at 25°C satisfied $12 \times 10^4$ Pa and the range of $10^4$ Pa $\leq$ G'(r) $\leq 10^8$ Pa, and G'(r)/G"(r) satisfied 6 and the range of $1 \leq$ G'(r)/G"(r) $\leq 30$. Regarding the SMC, the storage modulus G'(s) at 25°C was as high as $11000 \times 10^5$ Pa. G'(s)/G"(s) was as high as 5.4, and the porosity of the SMC was as high as 32% by volume. The number average length of voids of the SMC was large as 2900 um, and the flexibility of the obtained SMC was poor. In addition, regarding the SMC, the storage modulus G'(s) at 70°C was as high as $1500 \times 10^5$ Pa, and the flexibility of the obtained SMC was poor in environment of room temperature or higher. The tackiness of the SMC was poor at C, and the porosity of the fiber-reinforced composite material was poor at C.

[Table 1-1]

[Table 1-1]

| Resin composition | | | Example 1 | Example 2 | Example 3 | Example 4 | Example 5 | Example 6 | Example 7 | Example 8 |
|---|---|---|---|---|---|---|---|---|---|---|
| Resin composition | Component (A) | M20S | 24 | 24 | 11 | 11 | 11 | 16 | 16 | 16 |
| | | MI | | | | | | | | |
| | Component (B) | YD128 | | | 100 | 100 | 100 | 90 | 90 | 90 |
| | | EX614B | | | | | | 10 | 10 | 10 |
| | Component (C) | Tetrabutylammonium bromide | | | | | | | | |
| | | Tetrabutylphosphonium bromide | | | | | | | | |
| | | 2-Methylimidazole | | | | | | | | |
| | | Triphenylphosphine | | | | | | | | |
| | | Epoxy ester 3000A | 50 | 40 | | | | | | |
| | | Styrene | 50 | 60 | | | | | | |
| | | t-Butyl perbenzoate | 0.1 | 0.1 | | | | | | |
| | | DICY | | | 7 | 7 | 7 | 7 | 7 | 7 |
| Condition | | Weight content of the reinforcing fiber [8] | 40 | 40 | 40 | 50 | 60 | 50 | 50 | 50 |
| | | Thickening temperature [°C] | 40 | 40 | 40 | 40 | 40 | 25 | 40 | 60 |
| | | Thickening time [hour] | 24 | 24 | 24 | 24 | 24 | 48 | 21 | 8 |
| Resin properties | | Storage modulus G'(r) at 25°C [$\times 10^4$ Pa] | 4 | 2 | 12 | 12 | 12 | 17 | 19 | 20 |
| | | G'(r)/G"(r) at 25°C | 1.8 | 1.2 | 6 | 6 | 6 | 12 | 14 | 17 |

(continued)

| Sheet molding compound characteristics | | Example 1 | Example 2 | Example 3 | Example 4 | Example 5 | Example 6 | Example 7 | Example 8 |
|---|---|---|---|---|---|---|---|---|---|
| Sheet molding compound characteristics | Porosity [8] | 7 | 5 | 8 | 6 | 5 | 6 | 7 | 8 |
| Sheet molding compound characteristics | Number average length [$\mu$m] of voids | 1800 | 1900 | 1700 | 1500 | 1100 | 970 | 930 | 860 |
| Sheet molding compound characteristics | Storage modulus G'(s) at 25°C [$\times 10^5$ Pa] | 6 | 3 | 28 | 290 | 1200 | 380 | 440 | 1800 |
| Sheet molding compound characteristics | G' (s)/G" (s) at 25°C | 1.1 | 1 | 1.5 | 1.7 | 3.0 | 2.3 | 2.7 | 3.0 |
| Sheet molding compound characteristics | Storage modulus G'(s) at 70°C [$\times 10^5$ Pa] | 2 | 0.8 | 6 | 12 | 26 | 17 | 18 | 21 |
| Sheet molding compound characteristics | Tackiness | B | B | A | A | B | B | B | B |
| Fiber-reinforced composite material properties | Void | A | B | B | B | B | A | A | A |

[Table 1-2]

[Table 1-2]

| | | | Example 9 | Example 10 | Example 11 | Example 12 | Example 13 | Example 14 | Example 15 | Example 16 |
|---|---|---|---|---|---|---|---|---|---|---|
| Resin composition | Component (A) | M20S | 16 | 16 | 16 | 16 | 16 | 24 | 32 | |
| | | MI | | | | | | | | 10 |
| | Component (B) | YD128 | 90 | 90 | 90 | 90 | 90 | 90 | 90 | 90 |
| | | EX614B | 10 | 10 | 10 | 10 | 10 | 10 | 10 | 10 |
| | Component (C) | Tetrabutylammonium bromide | | | | | 3 | 3 | 3 | 3 |
| | | Tetrabutylphosphonium bromide | | | | | | | | |
| | | 2-Methylimidazole | | | | | | | | |
| | | Triphenylphosphine | | | | | | | | |
| | | Epoxy ester 3000A | | | | | | | | |
| | | Styrene | | | | | | | | |
| | | t-Butyl perbenzoate | | | | | | | | |
| | | DICY | 7 | 7 | 7 | 7 | 7 | 7 | 7 | 7 |
| Condition | | Weight content of the reinforcing fiber [%] | 50 | 50 | 50 | 50 | 50 | 50 | 50 | 50 |
| | | Thickening temperature [°C] | 80 | 40 | 40 | 40 | 40 | 40 | 40 | 40 |
| | | Thickening time [hour] | 6 | 28 | 53 | 59 | 24 | 24 | 24 | 24 |
| Resin properties | | Storage modulus G' (r) at 25°C [$\times 10^4$ Pa] | 22 | 25 | 98 | 270 | 220 | 48 | 7 | 4 |
| | | G'(r)/G"(r) at 25°C | 20 | 18 | 20 | 24 | 27 | 7 | 1.6 | 1.1 |

(continued)

| | | Example 9 | Example 10 | Example 11 | Example 12 | Example 13 | Example 14 | Example 15 | Example 16 |
|---|---|---|---|---|---|---|---|---|---|
| Sheet molding compound characteristics | Porosity [8] | 10 | 10 | 13 | 20 | 28 | 15 | 24 | 11 |
| | Number average length [$\mu$m] of voids | 720 | 870 | 770 | 740 | 320 | 430 | 390 | 880 |
| | Storage modulus G'(s) at 25°C [$\times 10^5$ Pa] | 1900 | 520 | 900 | 1150 | 1100 | 270 | 230 | 180 |
| | G'(s)/G"(s) at 25°C | 3.5 | 2.8 | 2.9 | 3.1 | 4.6 | 1.8 | 1.2 | 1.8 |
| | Storage modulus G'(s) at 70°C [$\times 10^5$ Pa] | 54 | 120 | 440 | 530 | 45 | 17 | 3 | 2 |
| | Tackiness | B | A | A | B | B | A | B | B |
| Fiber-reinforced composite material properties | Void | A | A | A | A | B | A | A | A |

EP 3 838 970 B1

[Table 2]

[Table 2]

|  |  |  | Example 17 | Example 18 | Example 19 | Example 20 | Example 21 | Comparative Example 1 | Comparative Example 2 | Comparative Example 3 | Comparative Example 9 |
|---|---|---|---|---|---|---|---|---|---|---|---|
| Resin composition | Component (A) | M20S | 11 | 11 | 11 | 11 | 11 | 8 | 25 | 11 | 11 |
|  |  | MI |  |  |  |  |  |  |  |  |  |
|  | Component (B) | YD128 | 90 | 90 | 90 | 90 | 90 | 100 | 100 | 100 | 100 |
|  |  | EX614B | 10 | 10 | 10 | 10 | 10 |  |  |  |  |
|  | Component (C) | Tetrabutylammonium bromide |  |  |  |  |  |  |  |  |  |
|  |  | Tetrabutylphosphonium bromide | 3 |  |  |  |  |  |  |  |  |
|  |  | 2-Methylimidazole |  | 3 |  | 1 | 9 |  |  |  |  |
|  |  | Triphenylphosphine |  |  | 3 |  |  |  |  |  |  |
|  |  | Epoxy ester 3000A |  |  |  |  |  |  |  |  |  |
|  |  | Styrene |  |  |  |  |  |  |  |  |  |
|  |  | t-Butyl perbenzoate |  |  |  |  |  |  |  |  |  |
|  |  | DICY | 7 | 7 | 7 | 7 | 7 | 7 | 7 | 7 | 7 |
| Condition | Weight content of the reinforcing fiber [8] |  | 50 | 50 | 50 | 50 | 50 | 50 | 50 | 30 | 70 |
|  | Thickening temperature [℃] |  | 40 | 90 | 90 | 90 | 90 | 90 | 90 | 40 | 90 |
|  | Thickening time [hour] |  | 24 | 24 | 24 | 24 | 24 | 24 | 24 | 24 | 24 |
| Resin properties | Storage modulus G'(r) at 25°C [$\times 10^4$ Pa] |  | 89 | 96 | 84 | 64 | 230 | 0.6 | 12 | 12 | 12 |
|  | G'(r)/G''(r) at 25°C |  | 14 | 20 | 13 | 11 | 28 | 0.8 | 0.8 | 6 | 6 |

(continued)

| | | Example 17 | Example 18 | Example 19 | Example 20 | Example 21 | Comparative Example 1 | Comparative Example 2 | Comparative Example 3 | Comparative Example 9 |
|---|---|---|---|---|---|---|---|---|---|---|
| Sheet molding compound characteristics | Porosity [%] | 13 | 20 | 15 | 10 | 28 | 2 | 31 | 37 | 32 |
| | Number average length [μm] of voids | 980 | 380 | 620 | 730 | 280 | 2800 | 1700 | 1700 | 2900 |
| | Storage modulus G'(s) at 25°C [$\times 10^5$ Pa] | 760 | 820 | 640 | 180 | 1200 | 0.8 | 1.7 | 0.6 | 11000 |
| | G'(s)/G''(s) at 25°C | 2.6 | 2.9 | 22 | 1.3 | 9.7 | 0.7 | 0.8 | 0.6 | 5.4 |
| | Storage modulus G'(s) at 70°C [$\times 10^5$ Pa] | 25 | 21 | 18 | 13 | 540 | 0.7 | 0.8 | 1.2 | 1500 |
| | Tackiness | A | A | A | A | B | C | C | C | C |
| Fiber-reinforced composite material properties | Void | A | A | A | A | A | C | C | C | C |

INDUSTRIAL APPLICABILITY

**[0088]** [0088] The SMC of the present invention has excellent flexibility while suppressing tackiness as compared with conventional SMCs. By using the SMC of the present invention, a fiber-reinforced composite material having few voids can be obtained. As a result, the fiber-reinforced composite material will be applied widely to sports and industrial applications in addition to aerospace applications and automobile applications, leading to a reduction in energy consumption centered on fossil fuels, and contribution to the problem of global warming can be expected.

**Claims**

1.  A sheet molding compound comprising a reinforcing fiber and a resin composition, having a weight content of the reinforcing fiber of 40% or more and 60% or less, having a porosity of 5% by volume or more and 30% by volume or less, and satisfying the following formulas in dynamic viscoelasticity measurement at 25°C:

$$10^5 \text{ Pa} \leq G'(s) \leq 10^9 \text{ Pa}$$

$$1 \leq G'(s)/G''(s) \leq 5$$

G'(s): Storage modulus [Pa] of sheet molding compound at 25°C
G"(s): Loss modulus [Pa] of sheet molding compound at 25°C,
wherein the resin composition is a thermosetting resin composition, and the resin composition comprises a component (A), and a component (B):

component (A): an isocyanate compound
component (B): an epoxy resin having one or more hydroxyl groups and two or more epoxy groups in one molecule,

wherein the component (A) and the component (B) in the resin composition satisfy the following formula:

$$1 \leq I/W \leq 2$$

I: Number of isocyanate groups of component (A) in resin composition
W: Total number of hydroxyl groups in resin composition, Wherein porosity, storage modulus G' (s) and loss modulus G"(s) are measured by the methods as described in the description.

2.  The sheet molding compound according to claim 1, wherein the storage modulus G' (s) at 70°C is $10^5$ Pa or more and $10^7$ Pa or less.

3.  The sheet molding compound according to claim 1 or 2, which satisfies the following formulas in the dynamic viscoelasticity measurement at 25°C of the resin composition,

$$10^4 \text{ Pa} \leq G'(r) \leq 10^8 \text{ Pa}$$

$$1 \leq G'(r)/G''(r) \leq 30$$

G'(r): Storage modulus [Pa] of resin composition at 25°C G"(r): Loss modulus [Pa] of resin composition at 25°C, wherein the storage modulus G'(r) and loss modulus G"(r) are measured by the methods as described in the description.

4.  The sheet molding compound according to any one of claims 1 to 3, comprising voids composed of carbon dioxide.

5.  The sheet molding compound according to any one of claims 1 to 4, wherein a number average length of the voids in the sheet molding compound is 10 um or more and 2000 um or less, wherein the length of the voids and the number average length of the voids are obtained by the method as described in the description.

6. The sheet molding compound according to any one of claims 1 to 5, wherein the resin composition contains at least one compound selected from the group consisting of a quaternary ammonium salt, a phosphonium salt, an imidazole compound, and a phosphine compound as a component (C).

7. The sheet molding compound according to any one of the claims 1 to 6, wherein the reinforcing fiber is carbon fiber.

8. A fiber-reinforced composite material obtained by curing the sheet molding compound according to any one of claims 1 to 7.

9. A method of producing the sheet molding compound according to any one of claims 1 to 7, the method comprising impregnating a reinforcing fiber with a resin composition and then performing heating under a condition satisfying the following formulas:

$$5000 \leq (T^{1.5} \times t) \leq 15000$$

$$25 \leq T \leq 80$$

T: thickening temperature [°C]
t: Thickening time [hour] at T.

## Patentansprüche

1. Plattenformverbindung, die eine Verstärkungsfaser und eine Harzzusammensetzung umfasst, einen Gewichtsgehalt der Verstärkungsfaser von 40 % oder mehr und 60 % oder weniger und eine Porosität von 5 Vol.-% oder mehr und 30 Vol.-% oder weniger aufweist und bei einer dynamischen Viskoelastizitätsmessung bei 25 °C den folgenden Formeln genügt:

$$10^5 \text{ Pa} \leq G'(s) \leq 10^9 \text{ Pa}$$

$$1 \leq G'(s) / G''(s) \leq 5$$

G' (s): Speichermodul [Pa] der Plattenformverbindung bei 25 °C
G" (s): Verlustmodul [Pa] der Plattenformverbindung bei 25 °C,

wobei die Harzzusammensetzung eine duroplastische Harzzusammensetzung ist und die Harzzusammensetzung eine Komponente (A) und eine Komponente (B) umfasst:

Komponente (A): eine Isocyanatverbindung,
Komponente (B): ein Epoxidharz mit einer oder mehreren Hydroxylgruppen und zwei oder mehr Epoxygruppen pro Molekül,
wobei die Komponente (A) und die Komponente (B) in der Harzzusammensetzung der folgenden Formel genügen:

$$1 \leq I/W \leq 2$$

I: Anzahl an Isocyanatgruppen der Komponente (A) in der Harzzusammensetzung,
W: Gesamtanzahl von Hydroxylgruppen in der Harzzusammensetzung,
wobei die Porosität, der Speichermodul G' (s) und der Verlustmodul G" (s) durch die in der Beschreibung beschriebenen Verfahren gemessen werden.

2.  Plattenformverbindung nach Anspruch 1, wobei der Speichermodul G' (s) bei 70 °C $10^5$ Pa oder mehr und $10^7$ Pa oder weniger beträgt.

3.  Plattenformverbindung nach Anspruch 1 oder 2, die bei der dynamischen Viskoelastizitätsmessung bei 25 °C der Harzzusammensetzung den folgenden Formeln genügt:

$$10^4 \text{ Pa} \leq G'(r) \leq 10^8 \text{ Pa}$$

$$1 \leq G'(r) / G''(r) \leq 30$$

G' (r): Speichermodul [Pa] der Harzzusammensetzung bei 25 °C,
G" (r): Verlustmodul [Pa] der Harzzusammensetzung bei 25 °C,
wobei der Speichermodul G' (r) und der Verlustmodul G" (r) durch die in der Beschreibung beschriebenen Verfahren gemessen werden.

4.  Plattenformverbindung nach einem der Ansprüche 1 bis 3, die aus Kohlendioxid bestehende Hohlräume umfasst.

5.  Plattenformverbindung nach einem der Ansprüche 1 bis 4, wobei die zahlenmittlere Länge der Hohlräume in der Plattenformverbindung 10 μm oder mehr und 2000 μm oder weniger beträgt, wobei die Länge der Hohlräume und die zahlenmittlere Länge der Hohlräume durch die in der Beschreibung beschriebenen Verfahren erhalten werden.

6.  Plattenformverbindung nach einem der Ansprüche 1 bis 5, wobei die Harzzusammensetzung zumindest eine Verbindung, die aus der aus einem quaternären Ammoniumsalz, einem Phosphoniumsalz, einer Imidazolverbindung und einer Phosphinverbindung bestehenden Gruppe ausgewählt ist, als Komponente (C) umfasst.

7.  Plattenformverbindung nach einem der Ansprüche 1 bis 6, wobei die Verstärkungsfaser eine Kohlefaser ist.

8.  Faserverstärktes Verbundmaterial, das durch Härten einer Plattenformverbindung nach einem der Ansprüche 1 bis 7 erhalten wird.

9.  Verfahren zur Herstellung einer Plattenformverbindung nach einem der Ansprüche 1 bis 7, wobei das Verfahren das Imprägnieren einer Verstärkungsfaser mit einer Harzzusammensetzung und dann das Ausführen einer Erwärmung unter einer Bedingung umfasst, die den folgenden Formeln genügt:

$$5000 \leq (T^{1,5} \times t) \leq 15000$$

$$25 \leq T \leq 80$$

T: Verdickungstemperatur [°C]
t: Verdickungszeit [Stunden] bei T.

**Revendications**

1.  Composé de moulage en feuille comprenant une fibre de renforcement et une composition de résine, présentant une teneur en poids de la fibre de renforcement de 40 % ou plus et de 60 % ou moins, présentant une porosité de 5 % en volume ou plus et de 30 % en volume ou moins, et satisfaisant aux formules suivantes en termes de mesure de viscoélasticité dynamique à 25°C :

$$10^5 \text{ Pa} \leq G'(s) \leq 10^9 \text{ Pa}$$

$$1 \leq G'(s)/G''(s) \leq 5$$

G'(s) : module de stockage [Pa] du composé de moulage en feuille à 25°C

G" (s) : module de perte [Pa] du composé de moulage en feuille à 25°C,

dans lequel la composition de résine est une composition de résine thermodurcissable, et la composition de résine comprend un composant (A), et un composant (B) :

composant (A) : un composé isocyanate

composant (B) : une résine époxy présentant 2 groupes hydroxyle ou plus et deux groupes époxy ou plus dans une molécule,

dans lequel le composant (A) et le composant (B) dans la composition de résine satisfont à la formule suivante :

$$1 \leq I/W \leq 2$$

I : nombre de groupes isocyanate du composant (A) dans la composition de résine

W : nombre total de groupes hydroxyle dans la composition de résine,

dans lequel la porosité, le module de stockage G' (s) et le module de perte G"(s) sont mesurés par les procédés tels que décrits dans la description.

2. Composé de moulage en feuille selon la revendication 1, dans lequel le module de stockage G' (s) à 70°C est de $10^5$ Pa ou plus et de $10^7$ Pa ou moins.

3. Composé de moulage en feuille selon la revendication 1 ou 2, qui satisfait aux formules suivantes en termes de mesure de viscoélasticité dynamique à 25°C de la composition de résine,

$$10^4 \text{ Pa} \leq G'(r) \leq 10^8 \text{ Pa}$$

$$1 \leq G'(r)/G''(r) \leq 30$$

G' (r) : module de stockage [Pa] de la composition de résine à 25°C

G"(r) : module de perte [Pa] de la composition de résine à 25°C,

dans lequel le module de stockage G'(r) et le module de perte G"(r) sont mesurés par les procédés tels que décrits dans la description.

4. Composé de moulage en feuille selon l'une quelconque des revendications 1 à 3, comprenant des vides composés de dioxyde de carbone.

5. Composé de moulage en feuille selon l'une quelconque des revendications 1 à 4, dans lequel une longueur moyenne en nombre des vides dans le composé de moulage en feuille est de 10 $\mu$m ou plus et de 2 000 $\mu$m ou moins, dans lequel la longueur des vides et la longueur moyenne en nombre des vides sont obtenues par le procédé tel que décrit dans la description.

6. Composé de moulage en feuille selon l'une quelconque des revendications 1 à 5, dans lequel la composition de résine contient au moins un composé choisi dans le groupe constitué d'un sel d'ammonium quaternaire, d'un sel de phosphonium, d'un composé d'imidazole et d'un composé de phosphine en tant que composant (C).

7. Composition de moulage en feuille selon l'une quelconque des revendications 1 à 6, dans laquelle la fibre de renforcement est une fibre de carbone.

8. Matériau composite renforcé de fibres obtenu par l'étape consistant à faire durcir la pâte de moulage en feuille selon l'une quelconque des revendications 1 à 7.

9. Procédé de production du composé de moulage en feuille selon l'une quelconque des revendications 1 à 7, le procédé comprenant l'imprégnation d'une fibre de renforcement avec une composition de résine, puis la réalisation d'un chauffage dans des conditions satisfaisant aux formules suivantes :

$$5\ 000 \leq (T^{1,5} \times t) \leq 15\ 000$$

$$25 \leq T \leq 80$$

T : température d'épaississement [°C]
t : Temps d'épaississement [heure] à T.

$$5\ 000 \leq (T^{1,5} \times t) \leq 15\ 000$$

**REFERENCES CITED IN THE DESCRIPTION**

**Patent documents cited in the description**

- JP 7179739 A
- JP 58191723 A
- WO 2017195607 A1